# EUROPEAN PATENT SPECIFICATION

(11) **EP 2 605 669 B1**
(45) Date of publication and mention of the grant of the patent: **04.11.2015**
(21) Application number: 11748344.6
(22) Date of filing: 16.08.2011
(51) Int. Cl.: A23C 9/123, A23L 3/3571, A23L 1/30, A23K 1/00

(54) **METHOD FOR IMPROVING THE SURVIVAL RATE OF PROBIOTIC**
VERFAHREN ZUR VERBESSERUNG DER ÜBERLEBENSRATE VON PROBIOTISCHEN BAKTERIEN
PROCÉDÉ POUR L'AMÉLIORATION DU TAUX DE SURVIE DE PROBIOTIQUE

(30) Priority: 16.08.2010 US 374067 P; 16.08.2010 EP 10172932
(43) Date of publication of application: 26.06.2013
(73) Proprietor: DuPont Nutrition Biosciences ApS, 1001 Copenhagen K (DK)
(72) Inventor: HENRIKSSON, Anders, Zetland New South Wales 2017 (AU)
(74) Representative: Cabinet Plasseraud
(86) International application number: PCT/EP2011/064106
(87) International publication number: WO 2012/022750

(56) References cited:
- EP-A1- 0 281 467
- HAYNES I N ET AL: "SURVIVAL OF PROBIOTIC CULTURES IN LOW-FAT ICE-CREAM", AUSTRALIAN JOURNAL OF DAIRY TECHNOLOGY, DAIRY INDUSTRY ASSOCIATION OF AUSTRALIA, MELBOURNE, AU, vol. 57, no. 1, 1 April 2002 (2002-04-01), pages 10-14, XP001102101, ISSN: 0004-9433
- THARMARAJ N ET AL: "Survival of Lactobacillus acidophilus, Lactobacillus paracasei subsp. paracasei, Lactobacillus rhamnosus, Bifidobacterium animalis and Propionibacterium in cheese-based dips and the suitability of dips as effective carriers of probiotic bacteria", INTERNATIONAL DAIRY JOURNAL, ELSEVIER APPLIED SCIENCE, BARKING, GB LNKD- DOI:10.1016/J.IDAIRYJ.2004.04.011, vol. 14, no. 12, 1 December 2004 (2004-12-01), pages 1055-1066, XP004573490, ISSN: 0958-6946
- MOAYEDNIA NASRIN ET AL: "Effect of refrigerated storage time on the viability of probiotic bacteria in fermented probiotic milk drinks", May 2009 (2009-05), INTERNATIONAL JOURNAL OF DAIRY TECHNOLOGY, VOL. 62, NR. 2, PAGE(S) 204-208, XP002601651, ISSN: 1364-727X the whole document

## Description

### FIELD OF THE INVENTION

The present invention relates to the improvement of the survival rate of probiotic selected from *Lactobacillus acidophilus* or *Bifidobacterium animalis lactis* by *Lactobacillus* strains that enhance the survival rate of probiotic strains in food or feed products.

### BACKGROUND OF THE INVENTION

*Lactobacillus acidophilus* and *Bifidobacterium ssp.* are the most commonly used probiotics. Their presence in the gastrointestinal tract aids in maintaining a desirable gastrointestinal microbiota, and helps in preventing infection by pathogenic bacteria and is in other ways of benefit to the host.

Live probiotic cultures, and especially *L. acidophilus* or *Bifidobacterium ssp,* are available in fermented dairy products, such as yogurt. However, during storage of the fermented dairy product, the survival rate of *L. acidophilus* or *Bifidobacterium ssp* in said product decreases. As a consequence, the content of live *L. acidophilus* in yogurt at the time of the ingestion of the finished product, by the consumer, may not be sufficient enough to have a desirable impact on the host gastrointestinal tract. This is even more critical in areas wherein storage at cold, dry and constant temperature is difficult.

EP2194118 describes the use of *Propionibacterium freudenreichii* to improve survival of lactic acid bacterium in yogurts. WO 2010/023290 describes the use of *Lactococcus lactis* and *Streptococcus thermophilus* for improving the growth of *Bifidobacterium* strain in fermented dairy products. WO 2008/148561 describes the use of a specific *Streptococcus thermophilus* for improving the growth of *Bifidobacterium* strain in fermented dairy products. But none of these documents put in evidence that *Lactobacillus* strains can enhance the survival of probiotic strains.

### SUMMARY OF THE INVENTION

The problem to be solved is to improve the survival rate of probiotic strains in food or feed products.

The solution is based on the finding of the present inventors that *Lactobacillus paracasei* or *Lactobacillus rhamnosus* strains increase the survival rate (or viability) of *Lactobacillus acidophilus* and *Bifidobacterium animalis lactis* during the storage of food or feed products.

In a first aspect, the present invention is drawn to a method for preparing a food or feed product comprising:
inoculating a medium with a probiotic strain, and a *Lactobacillus* strain that enhances the survival rate of the probiotic strain.

The *Lactobacillus* strain that enhances the viability of the probiotic strain is a *Lactobacillus paracasei* strain selected from the group consisting of the strains Lb2132, lbc-82, LC-10 and Lpc-37or a *Lactobacillus rhamnosus* strain Lr-32 and the probiotic strain is a *Lactobacillus acidophilus* strain or a *Bifidobacterium animalis lactis* strain.

In another aspect, the present invention is directed to the use of a *Lactobacillus* strain selected from the group consisting of the strains Lb2132, lbc-82, LC-10, Lpc-37 and Lr-32 in the manufacture of a food or feed product containing a probiotic strain for increasing the survival rate of said probiotic strain selected from the group consisting of a *Lactobacillus acidophilus* strain and a *Bifidobacterium animalis lactis* strain during the storage of said food or feed product.

### DETAILED DESCRIPTION

The present invention is directed to a method for preparing a food or feed product comprising:
inoculating a medium with a probiotic strain, and a *Lactobacillus* strain that enhances the survival rate of the probiotic strain.

In the present invention, the term probiotic refers to microorganisms that may have a beneficial effect on human health.

The probiotic strain is advantageously inoculated into the milk in an amount of 10⁸ to 10¹¹ cfu/L, preferably from 10⁹ to 10¹¹ cfu/L.

The *Lactobacillus* strain that enhances the survival rate of the probiotic strain is advantageously inoculated into the milk in an amount of 10⁸ to 10¹¹ cfu/L, preferably from 10⁹ to 10¹⁰ cfu/L.

The ratio between the *Lactobacillus* strain that enhances the survival rate of the probiotic strain and the probiotic strain inoculated into the milk is advantageously from 1:10 to 50:1, preferably from 1:1 to 20:1.

The *Lactobacillus* strain that enhances the viability of the probiotic strain is a *Lactobacillus paracasei* strain or a *Lactobacillus rhamnosus* strain and the probiotic strain is a *Lactobacillus acidophilus* strain or a *Bifidobacterium ssp.* strain.

The *Lactobacillus paracasei* strain is selected from the group consisting of the strains Lb2132, lbc-82, LC-10 and Lpc-37. The lbc-82 strain is available from Danisco commercial products LBC 82 Lyo or CHOOZIT ARO 21 LYO. The LC-10 strain is available from Danisco commercial products FLAVO BAC LF 302 and LbC81a. The LB2132 strain is available from Danisco commercial product Holdbac™ YMC. The strains available from commercial mixtures can be easily isolated with methods well know to the skilled person such as MRS agar supplemented with vancomycin, as described by Su et al (Lett Appl Microbiol 2006, 44:120-125). The Lpc-37 strain is commercially available from Danisco and has been deposited on 3^{rd} of January 2003 at the ATCC under the deposit number PTA-4798.

The *Lactobacillus rhamnosus* strain is selected from the group consisting of the strains Lr-32 which is commercially available from Danisco. Lr-32 has been deposited on 15^{th} of January 2009 at the DSMZ under the deposit number DSM 22193.

Advantageously, the *Lactobacillus acidophilus* strain is selected from the group of La-14 and NCFM, which are commercially available from Danisco. NCFM has been deposited on 3^{rd} of January 2003 at the ATCC under the deposit number PTA-4797.

The *Bifidobacterium ssp.* strain is a strain of *Bifidobacterium animalis lactis,* in particular strains HN019 or Bl-04, which are commercially available from Danisco. Bl-04 has been deposited on 23^{rd} of December 2003 at the ATCC under the deposit number PTA-5658.

In a particular aspect of the invention, the food or feed product obtained by the process of the present invention does not contain a *Propionibacterium freudenreichii* strain.

In a particular embodiment, the present invention is directed to a method for preparing a food or feed product comprising:
inoculating a medium with a *Lactobacillus acidophilus* strain, and a *Lactobacillus* strain selected from a *Lactobacillus paracasei* strain or a *Lactobacillus rhamnosus* strain.

The *Lactobacillus paracasei* strain is selected from the group consisting of the strains Lb2132, lbc-82, LC-10 and Lpc-37.

The *Lactobacillus rhamnosus* strain is the strains Lr-32.

Advantageously, the *Lactobacillus acidophilus* strain is selected from the group of La-14 and NCFM.

The *Lactobacillus paracasei* strain or the *Lactobacillus rhamnosus* strain is inoculated into the milk in an amount of 10⁸ to 10¹¹ cfu/L, preferably from 10⁹ to 10¹⁰ cfu/L.

The *Lactobacillus acidophilus* strain is inoculated into the milk in an amount of 10⁸ to 10¹¹ cfu/L, preferably from 10⁹ to 10¹¹.

The ratio between the *Lactobacillus paracasei* strain or the *Lactobacillus rhamnosus* strain and the *Lactobacillus acidophilus* strain inoculated into the milk is advantageously from 1:10 to 50:1, preferably from 1:1 to 20:1.

In another particular embodiment, the present invention is directed to a method for preparing a food or feed product comprising:
inoculating a medium with a *Bifidobacterium* strain, and a *Lactobacillus* strain selected from *Lactobacillus paracasei* the strains Lb2132, lbc-82, LC-10 and Lpc-37, or *Lactobacillus rhamnosus* Lr-32.

The bifidobacterium is a strain of *Bifidobacterium animalis lactis,* in particular strains HN019 or Bl-04, which are commercially available from Danisco. Bl-04 has been deposited on 23^{rd} of December 2003 at the ATCC under the deposit number PTA-5658.

The *Bifidobacterium* strain is inoculated into the milk in an amount of 10⁸ to 10¹¹ cfu/L, preferably from 10⁹ to 10¹¹ cfu/L.

The ratio between the *Lactobacillus paracasei* strain or the *Lactobacillus rhamnosus* strain and the *Bifidobacterium* strain inoculated into the milk is from from 1:10 to 50:1, preferably from 1:1 to 20:1

In still another particular embodiment, the invention concerns a method for preparing a food or feed product comprising:
inoculating a medium with a *Bifidobacterium animalis lactis* strain, a *Lactobacillus acidophilus* strain and a *Lactobacillus* strain selected from a *Lactobacillus paracasei* strain the strains Lb2132, lbc-82, LC-10 and Lpc-37, or a *Lactobacillus rhamnosus* strain Lr-32.

The food or feed product is advantageously selected from the group consisting of beverages and a dairy product.

Beverages can be fruit juices, an ingredient to soft drinks, or a beverage comprising whey protein, health teas, cocoa drinks, milk drinks and lactic acid bacteria drinks, yoghurt and drinking yoghurt.

Advantageously, the dairy products can be fermented dairy products such as yogurt and cheese, yoghurt drinks, quark, kefir, fermented milk-based drinks, buttermilk, cheeses, dressings, low fat spreads, fresh cheese, soy-based drinks, ice cream, etc.

Food products can also be ice creams, water ices and desserts, confectionery, biscuits cakes and cake mixes, snack foods, balanced foods and drinks, fruit fillings, care glaze, chocolate bakery filling, cheese cake flavoured filling, fruit flavoured cake filling, cake and doughnut icing, instant bakery filling creams, filing for cookies, ready-to-use bakery filling, reduced calorie filling, adult nutritional beverage, acidified soy/juice beverage, aseptic/retorted chocolate drink, bar mixes, beverage powders, calcium fortified soy/plain and chocolate milk, calcium fortified coffee beverage.

The medium to be inoculated can be the food or feed product itself or an ingredient or a mixture of ingredients of the food or feed product. The medium is advantageously selected from milk, fruit or vegetable juice,or any ingredients or food medium being part of the food products stated above.

In a preferred embodiment, the food or feed product is a fermented dairy product and the medium is milk. In this embodiment, the invention is thus directed to a method for preparing a fermented dairy product comprising:
inoculating milk with a probiotic strain selected from the group consisting of a *Lactobacillus acidophilus* strain and a *Bifidobacterium animalis lactis* strain, and a *Lactobacillus* strain selected from the group consisting of the strains Lb2132, lbc-82, LC-10, Lpc-37 and Lr-32, and a starter culture, and
fermenting the milk. In the present invention, the term starter culture refers to a single or mixed culture comprising Lactobacillus delbrueckii ssp. and/or Steptococcus sp. and/or Lactococcus sp. or other lactic acid bacteria that ferment the dairy product.

In a first alternative of this embodiment, the invention is directed to a method for preparing a fermented dairy product comprising:
inoculating milk with a *Lactobacillus acidophilus* strain, and a *Lactobacillus* strain selected from a *Lactobacillus paracasei* strain Lb2132, lbc-82, LC-10 or Lpc-37, or a *Lactobacillus rhamnosus* strain Lr-32, and a said starter culture, and
fermenting the milk.

In a second alternative of this embodiment, the invention is directed to a method for preparing a fermented dairy product comprising:
inoculating milk with a *Bifidobacterium animalis lactis* strain, and a *Lactobacillus* strain selected from a *Lactobacillus paracasei* strain Lb2132, lbc-82, LC-10 or Lpc-37, or a *Lactobacillus rhamnosus* strain Lr-32, and a starter culture, and
fermenting the milk.

In third alternative of this embodiment, the invention is thus directed to a method for preparing a fermented dairy product comprising:
inoculating milk with a *Bifidobacterium animalis lactis* strain, a *Lactobacillus acidophilus* strain, and a *Lactobacillus* strain selected from a *Lactobacillus paracasei* strain Lb2132, lbc-82, LC-10 or Lpc-37, or a *Lactobacillus rhamnosus* strain Lr-32, and a starter culture, and
fermenting the milk.

The milk is fermented under suitable conditions known by the person skilled in the art to obtain the desired fermented dairy product. In a particular embodiment, the milk is fermented at 30 to 43 °C for a period of 5 to 10 h until reaching a pH of 4.7 to 4.2. The fermented dairy product such obtained is subsequently cooled and stored at this temperature until its consumption. The storage temperature is generally set at 4-6°C but a break in of the cold chain can occur especially in areas wherein storage at cold, dry and constant temperature is difficult.

The fermented dairy product can be in a liquid or solid form such as yogurt, stirred yogurt, set yogurt, yogurt like drink, bitter milk, butter milk, sour cream, fresh cheese and cheese. Preferably, the fermented dairy product is selected from the group consisting of yogurt, stirred yogurt, set yogurt, and yogurt like drink. More preferably, the fermented dairy product is yoghurt.

The milk can be either mammal milk, such as cow's milk, goat's milk or sheep's milk, or plant milk, such as soy milk.

The advantage of the method of the invention is that the presence of the *L. paracasei* strains Lb2132, lbc-82, LC-10 and Lpc-37, and *L. rhamnosus* strain Lr-32, increases the survival rate of probiotics selected from L. *acidophilus* strain and *Bifidobacterium animalis lactis* strain. The survival rate of probiotic in the present invention represents the proportion of live bacteria of said probiotic remaining after a determined period of storage. Indeed, when considering for example fermented dairy products, the growth of *L. acidophilus* and *Bifidobacterium animalis lactis,* gradually decreases after the fermentation step and the proportion of live probiotic bacteria in the fermented dairy product starts to decrease.

"Increasing the survival rate of a bacteria" as defined in present invention thus means retaining a concentration of live bacteria as close as possible to the concentration of the food or feed product just after manufacture (i.e. just after the fermentation step in case of fermented milk products), during a determined storage period at a determined temperature. The temperature can be 4-6°C or higher. For example, it can be defined as retaining at least 2.5%, preferably at least 5%, more preferably at least 10%, even more preferably at least 30%, still even more preferably at least 50% of live bacteria of probiotic, relative to the concentration just after manufacture, after a period of storage of 30 days, preferably 80 days.

In a particular embodiment, the food or feed product contains at least three times, preferably 10 times, more preferably 20 times more viable *Lactobacillus acidophilus,* relative to the food or feed product without the *Lactobacillus* strain that enhances the survival rate of the probiotic strain, after 30 days of storage at 4-6°C. Alternatively, the food or feed product retains at least 2.5%, preferably 5%, more preferably at least 10%, even more preferably at least 50% of viable *Lactobacillus acidophilus,* relative to the concentration just after manufacture, after a period of storage of 30 days at 4-6°C. Alternatively, the food or feed product that contained 10⁹ cfu/L just after manufacturing contains at least 10⁹ cfu/L of viable *L*. *acidophilus* after 30 days of storage at 4-6°C.

In another particular embodiment, the food or feed product contains at least 30%, preferably at least 50%, more preferably 100% more viable *Bifidobacterium animalis lactis,* relative to the food or feed product without the *Lactobacillus* strain that enhances the survival rate of the probiotic strain, after 30 days, preferably 80 days, of storage at 4-6°C. Alternatively, the food or feed product retains at least 50%, preferably at least 75% more preferably at least 100% of viable *Bifidobacterium animalis lactis,* relative to the concentration just after manufacture, after a period of storage of 30 days, preferably 80 days, at 4-6°C. Advantageously, the concentration of *Bifidobacterium animalis lactis* in the food or feed product increases relative to the concentration just after manufacture. Alternatively, the food or feed product that contained 10⁹ cfu/L just after manufacturing contains at least 10⁹ cfu/L of viable *Bifidobacterium animalis lactis* after 30 days, preferably 80 days of storage at 4-6°C.

The recommended storage temperature for food or feed products containing probiotic is generally 4-6°C. However, a break in the cold chain can occur, especially in areas wherein storage at cold, dry and constant temperature is difficult. Alternatively, the period of storage can suffer from a break in the cold chain so as the fermented dairy product is, for example, subjected to a temperature up to 30°C for a total period up to 2 days. Indeed, the *L*. *paracasei* strains Lb2132, lbc-82, LC-10 and Lpc-37, and *L. rhamnosus* strain Lr-32, are particularly effective in protecting *L. acidophilus* strain and *Bifidobacterium animalis lactis* strain, when the fermented dairy product has been subjected to temperature abuse. This is particularly valuable for regions with harsh temperatures or where stability of probiotics is a problem, due to issues with temperature abuse or breaks in the cold chain during transportation.

The survival rate of probiotic is also affected by the pH of the food or feed product. Indeed, in the case of fermented dairy products, especially yogurt, the pH is generally from 4.6 to 4.2. The initial pH of such a fermented milk product (i.e. the pH of the product just after the fermentation step) is often kept around 4.5 to improve survival of probiotics. However, from a sensory point of view, a lower pH is often preferred. An initial pH of 4.2 is more detrimental for the survival rate of probiotic strains comprised into the fermented dairy product. Therefore, there is a need for a solution enhancing probiotic strain survival in this kind of fermented dairy products.

In a preferred embodiment wherein the food or feed product is a fermented dairy product, the fermented dairy product contains at least three times, preferably 10 times, more preferably 20 times more viable *Lactobacillus acidophilus,* relative to the fermented dairy product without the *Lactobacillus* strain that enhances the survival rate of the probiotic strain, after 30 days of storage at 4-6°C, wherein the fermented dairy product has an initial pH of 4.2. Alternatively, the fermented dairy product retains at least 2.5%, preferably 5%, more preferably at least 10%, even more preferably at least 50% of viable *Lactobacillus acidophilus,* relative to the concentration just after the fermentation step, after a period of storage of 30 days at 4-6°C, in a fermented dairy product with an initial pH of 4.2. In another preferred embodiment, the fermented dairy product contains at least 2.5 times and preferably 3 times more viable *Lactobacillus acidophilus,* relative to the fermented dairy product without the Lactobacillus strain that enhances the survival rate of the probiotic strain, after 80 days of storage at 4-6°C, wherein the fermented dairy product has an initial pH of 4.5. Alternatively, the fermented dairy product retains at lest 30%, preferably at least 40%, more preferably at least 50%, even more preferably at least 60% of viable *Lactobacillus acidophilus,* relative to the concentration just after the fermentation step, after a period of storage of 80 days at 4-6°C, in a fermented dairy product with an initial pH of 4.5.

Alternatively, the fermented dairy product, that contained 10⁹ cfu/L just after manufacturing, contains at least 10⁹ cfu/L of viable *L. acidophilus* after 30 days of storage at 4-6°C, in a fermented dairy product with initial pH of 4.2, or preferably at least 10⁹ cfu/L of viable *L*. *acidophilus* after 80 days of storage at 4-6°C, in a fermented dairy product with initial pH of 4.5.

In another preferred embodiment wherein the food or feed product is a fermented dairy product, the fermented dairy product contains at least 30%, preferably at least 50%, more preferably 100% more viable *Bifidobacterium animalis lactis,* relative to the fermented dairy product without the Lactobacillus strain that enhances the survival rate of the probiotic strain, after 30 days, preferably 80 days, of storage at 4-6°C, wherein the fermented dairy product has an initial pH of 4.2. Alternatively, the fermented dairy product retains at least 50%, preferably at least 75% more preferably at least 100% of viable *Bifidobacterium animalis lactis,* relative to the concentration just after the fermentation step, after a period of storage of 30 days, preferably 80 days, at 4-6°C, in a fermented dairy product with an initial pH of 4.2.

Alternatively, the fermented dairy product that contained 10⁹ cfu/L just after manufacturing, contains at least 10⁹ cfu/L of viable *Bifidobacterium animalis lactis* after 30 days, preferably 80 days of storage at 4-6°C, in a fermented dairy product with initial pH of 4.2.

The preceding percentages are expressed on the basis of the amount of *Lactobacillus acidophilus* and *Bifidobacterium animalis lactis* respectively just after the fermentation step.

The present invention also relates to the use of a *Lactobacillus* strain in the manufacture of a food or feed product containing a probiotic strain for increasing the survival rate of said probiotic strain during the storage of said product.

The *Lactobacillus* strain that enhances the viability of the probiotic strain is a *Lactobacillus paracasei* strain or a *Lactobacillus rhamnosus* strain and the probiotic strain is a *Lactobacillus acidophilus* strain or a *Bifidobacterium ssp.* strain.

The *Lactobacillus paracasei* strain is selected from the group consisting of the strains Lb2132, lbc-82, LC-10 and Lpc-37.

The *Lactobacillus rhamnosus* strain is the strains Lr-32.

Advantageously, the *Lactobacillus acidophilus* strain is selected from the group of *Lactobacillus acidophilus* strains La-14 and NCFM.

The *Bifidobacterium ssp.* strain is a strain of *Bifidobacterium animalis lactis,* more preferably HN019 or Bl-04 strain.

The following examples illustrating the present invention represent specific embodiments of the invention and are not intended as limiting the scope of the invention.

### EXAMPLES 1-4

Milk base used for yoghurt fermentations was composed of 12% whole milk powder (Fonterra, NZ) reconstituted in distilled water. Ingredients were mixed and pasteurized at 90°C for 10 minutes. Pasteurized milk cooled to 10°C within 30 minutes and subsequently stored over night at 4-6°C before fermentation.

The milk was inoculated with *Lactobacillus acidophilus* (La-14) alone or in combination with a *Lactobacillus paracasei* strain (Lb2132, Lpc-37, Lbc-82 or LC-10) and fermented at 43°C until pH 4.2 was reached. Thereafter, fermented milk was cooled to 10°C within 30 minutes and stored at 4-6°C for 30 days, unless specified otherwise. All fermentations were conducted with *Streptococcus thermophilus and Lactobacillus bulgaricus* (at 10⁹ cfu/L for *Streptococcus thermophilus and* at 10⁷ cfu/L for *Lactobacillus bulgaricus*). Inoculation rates (expressed in cfu/L) of *Lactobacillus acidophilus* and *Lactobacillus paracasei* are presented in table 1.

**Table 1**

| | Control | Ex. 1 | Ex. 2 | Ex. 3 | Ex. 4 |
|---|---|---|---|---|---|
| La-14 | 10⁹ | 10⁹ | 10⁹ | 10⁹ | 10⁹ |
| Lb2132 | - | 10¹⁰ | - | - | - |
| Lpc-37 | - | - | 10¹⁰ | - | - |
| Lbc-82 | - | - | - | 10¹⁰ | - |
| LC-10 | - | - | - | - | 10¹⁰ |

The survival rate of *Lactobacillus acidophilus* in yogurts was assessed on the day after fermentations and after storage of yoghurts for 10, 20 and 30 days. Survival rate of L. acidophilus was assessed by diluting aliquots of yoghurt (1 ml) in peptone water (1/10 dilutions). Dilutions were inoculated into MRS agar (pour plate) supplemented with clindamycin (10µl/ml). Inoculated agar plates were incubated anaerobically for 48-72 hours at 37°C. The results are expressed as percent remaining viable cells of Lactobacillus acidophilus relative to viable cells of *Lactobacillus acidophilus* one day after fermentation (day 0). Results are presented in table 2.

| Days of storage | Remaining viable *L. acidophilus* in yoghurt after storage(%) | | | | |
|---|---|---|---|---|---|
| | Control | Ex. 1 | Ex. 2 | Ex. 3 | Ex. 4 |
| Day 0 | 100 | 100 | 100 | 100 | 100 |
| 10 days | 13 | 69 | 42 | 22 | 39 |
| 20 days | 2.3 | 35 | 23 | 12 | 25 |
| 30 days | 0.7 | 3.9 | 17 | 2.5 | 7.7 |

In view of those results, *L. paracasei* is efficient for increasing the survival rate of *L. acidophilus* in yogurt with an initial pH of 4.2 which is not favourable for the viability of such a probiotic.

### Example 6

The yoghurts were prepared and stored in the same conditions as for examples 1-4 except the milk was inoculated with *Lactobacillus acidophilus* (La-14) alone or in combination with a *Lactobacillus rhamnosus* strain (Lr-32). Inoculation rates (expressed in cfu/L) are presented in table 3.

| | Control | Ex. 6 |
|---|---|---|
| La-14 | 10⁹ | 10⁹ |
| Lr-32 | - | 10¹⁰ |

The survival rate of *Lactobacillus acidophilus* in yogurts was measured as mentioned in examples 1-4. The results show that the survival rate of *L. acidophilus* was efficiently increased with the presence of *L. rhamnosus.*

### Examples 7 and 8

The yoghurts were prepared and stored in the same conditions as for examples 1-4 except the milk was inoculated with *Bifidobacterium animalis lactis* (Bl-04) alone or in combination with a *Lactobacillus paracasei* (Lb2132, contained in Holdbac™ YM-C, or Lr-32). Inoculation rates (expressed in cfu/L) are presented in table 4.

**Table 4**

| | Control | Ex. 7 | Ex. 8 |
|---|---|---|---|
| Bl-04 | 10⁹ | 10⁹ | 10⁹ |
| Holdbac YM-C | - | 10¹⁰ | - |
| Lr-32 | - | - | 10¹⁰ |

The survival rate of *Bifidobacterium animalis lactis* in yogurts was assessed on the day after fermentations and after storage of yoghurts for 30 days. Survival rate of *Bifidobacterium animalis lactis* was assessed by diluting aliquots of yoghurt (1 ml) in peptone water (1/10 dilutions). Dilutions were inoculated into TOS agar (pour plate) supplemented with lithium mupriocin (0.05g/L). Inoculated agar plates were incubated anaerobically for 48-72 hours at 37°C. The results are expressed as percent remaining viable cells of *Bifidobacterium* relative to viable cells of *Bifidobacterium* one day after fermentation (day 0).

The results show that the survival rate of *B. animalis lactis* was efficiently increased with the presence of *L. paracasei.* Furthermore, the concentration of *B. animalis lactis* was retained and even increased as compared with the concentration of *B. animalis lactis* one day after the fermentation.

### EXAMPLE 9

Milk base used for yoghurt fermentations was composed of 12% whole milk powder (Fonterra, NZ) reconstituted in distilled water. Ingredients were mixed and pasteurized at 90°C for 10 minutes. Pasteurized milk cooled to 10°C within 30 minutes and subsequently stored over night at 4-6°C before fermentation.

The milk was inoculated with *Lactobacillus acidophilus* (La-14) alone or in combination with *Propionibacterium freudenreichii* subsp. *Shermanii* (contained in Holdbac™ YM-C or separately) and/or *Lactobacillus paracasei* (Lb2132, contained in Holdbac™ YM-C or separately) and fermented at 43°C until pH 4.5 was reached. Thereafter, fermented milk was cooled to 10°C within 30 minutes and stored at 4-6°C for 80 days. All fermentations were conducted with *Steptococcus thermophilus and Lactobacillus bulgaricus* in the same conditions as above. Inoculation rates of *Lactobacillus acidophilus,* Holdbac™ YM-C, *Propionibacterium freudenreichii* subsp. *Shermanii* and *Lactobacillus paracasei* and the results are presented in table 5.

**Table 5**

| | Control | Comp. Ex. 1 | Comp. Ex. 2 | Comp. Ex. 3 | Ex. 9 |
|---|---|---|---|---|---|
| La-14 | 10⁹ | 10⁹ | 10⁹ | 10⁹ | 10⁹ |
| Holdbac YM-C | - | 10¹⁰ | - | - | - |
| Lb2132 | - | - | 10¹⁰ | - | 10¹⁰ |
| *P.freudenreichii shermanii* | - | - | 10⁸ | 10⁸ | - |

The survival rate of *Lactobacillus acidophilus* in yogurts was measured as mentioned in examples 1-4. The results are shown in table 6.

**Table 6**

| Days of storage | Remaining viable *L. acidophilus* in yoghurt after storage(%) | | | | |
|---|---|---|---|---|---|
| | Control | Comp. Ex.1 | Comp. Ex.2 | Ex. 9 | Comp. Ex.3 |
| Day 0 | 100 | 100 | 100 | 100 | 100 |
| 30 | 72 | 53 | 57 | 67 | 31 |
| 60 | 24 | 39 | 52 | 62 | 36 |
| 80 | 18 | 50 | 49 | 60 | 11 |

These results confirm that *Lactobacillus strain* enhances the viability of *Lactobacillus acidophilus* in opposition to *Propionibacterium freudenreichii* subsp. *Shermanii.*

## Claims

1. Use of a *Lactobacillus* strain selected from the group consisting of the strains Lb2132, lbc-82, LC-10, Lpc-37 and Lr-32 in the manufacture of a food or feed product containing a probiotic strain selected from the group consisting of a *Lactobacillus acidophilus* strain and a *Bifidobacterium animalis lactis* strain for increasing the survival rate of said probiotic strain during the storage of said food or feed product.

2. Use according to claim 1, wherein the probiotic strain is the *Lactobacillus acidophilus* strain La-14 or the *Bifidobacterium animalis lactis* strain Bl-04.

3. Use according to claim 1 or 2, wherein the *Lactobacillus* strain is selected from the group consisting of the strains Lb2132, lbc-82, LC-10 and Lpc-37, preferably Lpc-37 deposited on 3^{rd} of January 2003 at the ATCC under the deposit number PTA-4798.

4. A method for preparing a food or feed product comprising:
inoculating a medium with a probiotic strain selected from the group consisting of a *Lactobacillus acidophilus* strain and a *Bifidobacterium animalis lactis* strain, and a *Lactobacillus* strain that enhances the survival rate of the probiotic strain selected from the group consisting of the strains Lb2132, lbc-82, LC-10, Lpc-37 and Lr-32.

5. The method according to claim 4, wherein the probiotic strain is inoculated into the milk in an amount of 10⁸ to 10¹¹ cfu/L.

6. The method according to anyone of claims 4 or 5, wherein the *Lactobacillus* strain that enhances the survival rate of the probiotic strain is inoculated into the milk in an amount of 10⁸ to 10¹¹ cfu/L.

7. The method according to anyone of claims 4 to 6, wherein the ratio between the *Lactobacillus* strain and the probiotic strain inoculated into the milk is from 1:10 to 50:1.

8. The method according to anyone of claims 4 to 7, wherein the *Lactobacillus* strain that enhances the survival rate of the probiotic strain is selected from the group consisting of the strains Lb2132, lbc-82, LC-10 and Lpc-37, preferably Lpc-37.

9. The method according to anyone of claims 4 to 7, wherein the *Lactobacillus* strain that enhances the survival rate of the probiotic strain is the strain Lr-32.

10. The method according to claims 4 to 9, wherein the *Lactobacillus acidophilus* strain is selected from the group consisting of the strains La-14 and NCFM.

11. The method according to claims 4 to 9, wherein the *Bifidobacterium animalis lactis* strain is selected from the group consisting of the strains HN019 or Bl-04.

12. The method according to anyone of claims 4 to 11, wherein the food or feed product retains at least 50% of viable probiotic, relative to the concentration just after the fermentation step, after a period of storage of 30 days at 4-6°C.

13. The method according to anyone of claims 4 to 12, wherein the food or feed product is yoghurt having an initial pH of 4.2 and the medium is milk.

## Patentansprüche

1. Verwendung von einem *Lactobacillus* Stamm, ausgewählt aus der Gruppe bestehend aus den Stämmen Lb2132, lbc-82, LC-10, Lpc-37 und Lr-32 in der Herstellung eines Nahrungsmittel- oder Futtermittelprodukts, das einen probiotischen Stamm enthält, ausgewählt aus der Gruppe bestehend aus einem *Lactobacillus acidophilus* Stamm und einem *Bifidobacterium animalis lactis* Stamm zum Erhöhen der Überlebensrate des probiotischen Stamms während der Lagerung des Nahrungsmittel- oder Futtermittelprodukts.

2. Verwendung nach Anspruch 1, wobei der probiotische Stamm der *Lactobacillus acidophilus* Stamm La-14 oder der *Bifidobacterium animalis lactis* Stamm Bl-04 ist.

3. Verwendung nach Anspruch 1 oder 2, wobei der *Lactobaccilus* Stamm ausgewählt ist aus der Gruppe bestehend aus den Stämmen Lb2132, lbc-82, LC-10 und Lpc-37, bevorzugt Lpc-37, der am 3ten Januar 2003 bei dem ATCC unter der Hinterlegungsnummer PTA-4798 hinterlegt wurde.

4. Verfahren zur Herstellung eines Nahrungsmittel- oder Futtermittelprodukts umfassend:
Inokulieren eines Mediums mit einem probiotischen Stamm ausgewählt aus der Gruppe bestehend aus einem *Lactobacillus acidophilus* Stamm und einem *Bifidobacterium animalis lactis* Stamm, und einem *Lactobacillus* Stamm, der die Überlebensrate des probiotischen Stamms ausgewählt aus der Gruppe bestehend aus den Stämmen Lb2132, lbc-82, LC-10, Lpc-37 und Lr-32 erhöht.

5. Verfahren nach Anspruch 4, wobei der probiotische Stamm in einer Menge von 10⁸ bis 10¹¹ cfu/L in die Milch inokuliert wird.

6. Verfahren nach einem der Ansprüche 4 oder 5, wobei der *Lactobacillus* Stamm, der die Überlebensrate des probiotischen Stamms erhöht, in einer Menge von 10⁸ bis 10¹¹ cfu/L in die Milch inokuliert wird.

7. Verfahren nach einem der Ansprüche 4 bis 6, wobei das Verhältnis zwischen dem *Lactobacillus* Stamm und dem probiotischen Stamm, die in die Milch inokuliert werden, zwischen 1:10 bis 50:1 ist.

8. Verfahren nach einem der Ansprüche 4 bis 7, wobei der *Lactobacillus* Stamm, der die Überlebensrate des probiotischen Stamms erhöht, ausgewählt ist aus der Gruppe bestehend aus den Stämmen Lb2132, lbc-82, LC-10 und Lpc-37, bevorzugt Lpc-37.

9. Verfahren nach einem der Ansprüche 4 bis 7, wobei der *Lactobacillus* Stamm, der die Überlebensrate des probiotischen Stamms erhöht, der Stamm Lr-32 ist.

10. Verfahren nach Ansprüchen 4 bis 9, wobei der *Lactobacillus acidophilus* Stamm ausgewählt ist aus der Gruppe bestehend aus den Stämmen La-14 und NCFM.

11. Verfahren nach Ansprüchen 4 bis 9, wobei der *Bifidobacterium animalis lactis* Stamm ausgewählt ist aus der Gruppe bestehend aus den Stämmen HN019 oder Bl-04.

12. Verfahren nach einem der Ansprüche 4 bis 11, wobei das Nahrungsmittel- oder Futtermittelprodukt mindestens 50% des lebensfähigen Probiotikums behält, relativ zu der Konzentration gleich nach dem Fermentationsschritt, nach einer Lagerdauer von 30 Tagen bei 4-6°C.

13. Verfahren nach einem der Ansprüche 4 bis 12, wobei das Nahrungsmittel- oder Futtermittelprodukt Joghurt mit einem anfänglichen pH von 4,2 ist und das Medium Milch ist.

## Revendications

1. Utilisation d'une souche de *Lactobacillus* choisie dans le groupe constitué des souches Lb2132, lbc-82, LC-10, Lpc-37 et Lr-32 dans la production d'un aliment ou produit alimentaire contenant une souche de probiotique choisie dans le groupe constitué d'une souche de *Lactobacillus acidophilus* et d'une souche de *Bifidobacterium animalis lactis* pour augmenter le taux de survie de ladite souche de probiotique durant le stockage dudit aliment ou produit alimentaire.

2. Utilisation selon la revendication 1, dans laquelle la souche de probiotique est la souche de *Lactobacillus acidophilus* La-14 ou la souche de *Bifidobacterium animalis lactis* B1-04.

3. Utilisation selon la revendication 1 ou 2, dans laquelle la souche de *Lactobacillus* est choisie dans le groupe constitué des souches Lb2132, lbc-82, LC-10 et Lpc-37, de préférence Lpc-37, déposée le 3 janvier 2003 auprès de l'ATCC sous le numéro de dépôt PTA-4798.

4. Procédé pour la préparation d'un aliment ou produit alimentaire comprenant :
l'inoculation d'un milieu avec une souche de probiotique choisie dans le groupe constitué d'une souche de *Lactobacillus acidophilus* et d'une souche de *Bifidobacterium animalis lactis,* et d'une souche de *Lactobacillus* qui améliore le taux de survie de la souche de probiotique choisie dans le groupe constitué des souches Lb2132, lbc-82, LC-10, Lpc-37 et Lr-32.

5. Procédé selon la revendication 4, dans lequel la souche de probiotique est inoculée dans le lait dans une quantité de 10⁸ à 10¹¹ ufc/l.

6. Procédé selon l'une quelconque des revendications 4 ou 5, dans lequel la souche de *Lactobacillus* qui améliore le taux de survie de la souche de probiotique est inoculée dans le lait dans une quantité de 10⁸ à 10¹¹ ufc/l.

7. Procédé selon l'une quelconque des revendications 4 à 6, dans lequel le rapport entre la souche de *Lactobacillus* et la souche de probiotique inoculée dans le lait va de 1:10 à 50:1.

8. Procédé selon l'une quelconque des revendications 4 à 7, dans lequel la souche de *Lactobacillus* qui améliore le taux de survie de la souche de probiotique est choisie dans le groupe constitué des souches Lb2132, lbc-82, LC-10 et Lpc-37, de préférence Lpc-37.

9. Procédé selon l'une quelconque des revendications 4 à 7, dans lequel la souche de *Lactobacillus* qui améliore le taux de survie de la souche de probiotique est la souche Lr-32.

10. Procédé selon les revendications 4 à 9, dans lequel la souche de *Lactobacillus acidophilus* est choisie dans le groupe constitué des souches La-14 et NCFM.

11. Procédé selon les revendications 4 à 9, dans lequel la souche de *Bifidobacterium animalis lactis* est choisie dans le groupe constitué des souches HN019 ou B1-04.

12. Procédé selon l'une quelconque des revendications 4 à 11, dans lequel l'aliment ou produit alimentaire conserve au moins 50 % du probiotique viable, par rapport à la concentration juste après l'étape de fermentation, après une période de stockage de 30 jours à 4 à 6 °C.

13. Procédé selon l'une quelconque des revendications 4 à 12, dans lequel l'aliment ou produit alimentaire est un yaourt ayant un pH initial de 4,2 et le milieu est le lait.
